# FASCICULE DE BREVET EUROPEEN

(11) **EP 0 460 147 B1**
(45) Date de publication et mention de la délivrance du brevet: **01.03.1995**
(21) Numéro de dépôt: 91900271.7
(22) Date de dépôt: 11.12.1990
(51) Int. Cl.: G03B 21/11

(54) **LECTEUR DE MICROFICHES PORTATIF**
TRAGBARES MIKROFICHELESEGERÄT
PORTABLE MICROFICHE READING DEVICE

(30) Priorité: 22.12.1989 FR 8917086
(43) Date de publication de la demande: 11.12.1991
(73) Titulaire: SAVEMA S.A., F-95310 S.-Ouen-l'Aumône (FR)
(72) Inventeur: DESSERT, Patrick, F-78400 Chatou (FR)
(74) Mandataire: Ruellan-Lemonnier, Brigitte
(86) Numéro de dépôt international: FR9000898
(87) Numéro de publication internationale: WO9110160

(56) Documents cités:
- FR-A- 2 349 851
- FR-A- 2 350 045
- US-A- 4 014 077
- US-A- 4 130 352
- US-A- 4 334 743

## Description

La présente invention concerne un lecteur de microfiches portatif, plus particulièrement un lecteur de microfiches portatif destiné à être utilisé par les techniciens des services après-vente lors de leur intervention chez le client. La structure générale d'un tel lecteur de microfiches portatif est décrite dans US-A-4,130,352.

Pour pouvoir réaliser leur dépannage, les techniciens des services après-vente emportent chez le client une documentation technique relativement volumineuse constituée notamment de schémas électriques, de guides d'intervention, d'aide aux diagnostics, de vues éclatées des machines avec la liste des pièces détachées. Cette documentation technique est une documentation papier. L'utilisation d'une telle documentation papier pose de nombreux problèmes, notamment au niveau des mises à jour. En effet, la documentation de chaque technicien dépendant d'une même unité d'intervention est, en général, faite en photocopiant une documentation de base. On assiste ainsi à la création d'une documentation technique parallèle qui échappe au mise à jour dont elle devrait faire l'objet. Ceci entraîne en général des problèmes lors du dépannage tels qu'une mauvaise identification des pièces détachées qui devront être commandées et remplacées ou l'utilisation de mauvais schémas ne permettant pas de détecter rapidement les pannes. D'autre part, cette documentation technique par papier est très onéreuse, car lors d'une modification de pièces, chaque feuille concernant la pièce doit être mise à jour.

La présente invention a pour but de remédier à ces inconvénients en proposant un lecteur de microfiches portatif qui permet de disposer sous forme de microfiches l'ensemble de la documentation technique et de la consulter in-situ de manière très facile.

La présente invention a aussi pour but de proposer un nouveau lecteur de microfiches portatif de faible encombrement, très léger et permettant d'obtenir une projection de l'image à la fois sur un écran solidaire du couvercle ou sur un mur et facilitant le suivi des tests.

En conséquence, la présente invention a pour objet un lecteur de microfiches portatif selon la revendication 1. Le moyen de fixation est de préférence constitué par un moyen de pincement mécanique ou magnétique.

Ainsi, le lecteur de microfiches conforme à la présente invention permet de positionner devant l'écran une feuille, notamment une feuille de papier qui peut recueillir des anotations se superposant à l'image projetée pour rendre compte des tests effectués. Ceci permet donc au technicien de suivre très facilement les différents tests qu'il a réalisés et de pouvoir en conséquence détecter rapidement une panne.

Selon une autre caractéristique de la présente invention, le couvercle est solidarisé avec le fond de la mallette par l'intermédiaire de moyens permettant une ouverture à 90° ou à 180° par rapport au fond de la mallette. Selon un mode de réalisation préférentiel, ces moyens sont constitués par au moins un compas dont une extrémité est fixée de manière amovible sur la mallette. L'utilisation d'un tel couvercle permet donc une projection de l'image soit sur l'écran réalisé dans le fond du couvercle, soit directement sur un mur ou autre écran amovible.

Selon une caractéristique supplémentaire de la présente invention, le passe-vues est monté sur une platine déplaçable selon les deux directions horizontales. Cette caractéristique permet de positionner facilement la vue à projeter en face de l'unité optique.

Selon encore une autre caractéristique de la présente invention, l'unité optique est constituée par un miroir de renvoi de la lumière, un condenseur asphérique, un objectif et un miroir de renvoi pour projection, chaque élément étant monté sur une platine-support fixée de manière amovible sur le fond de la mallette.

Selon un mode de réalisation préférentiel, le miroir de renvoi pour projection est monté de manière rabattable à l'extrémité d'un élément-support sensiblement en forme de L dont l'autre extrémité est fixée sur la platine-support. D'autre part, l'objectif est monté dans un porte-objectif fixé de manière flottante sur l'élément-support. De préférence, le porte-objectif est maintenu en appui contre le passe-vue par l'intermédiaire d'un moyen élastique monté entre le porte-objectif et l'élément-support. De plus, le porte-objectif comporte au moins un barillet pour recevoir l'objectif et un moyen de positionnement et de maintien en place du barillet en face du condenseur. D'autre part, l'élément-support est muni d'une découpe pour le passage du ou des objectifs.

Selon une caractéristique supplémentaire, le fond de la mallette comporte un emplacement pour un boîtier de rangement des microfiches amovible.

D'autres caractéristiques et avantages de la présente invention apparaîtront à la lecture de la description faite ci-après d'un mode de réalisation préférentiel avec référence aux dessins ci-annexés dans lesquels :
- la figure 1 est une vue en perspective partiellement éclatée d'un mode de réalisation d'un lecteur de microfiches portatif conforme à la présente invention ;
- la figure 2 est un schéma de principe de l'unité optique, et
- la figure 3 est un schéma de cablage de la lampe d'éclairage, et
- la figure 4 est une vue en élèvation schématique montrant la fixation du porte-objectif.

Pour simplifier la description, dans les figures les mêmes élements portent les mêmes références.

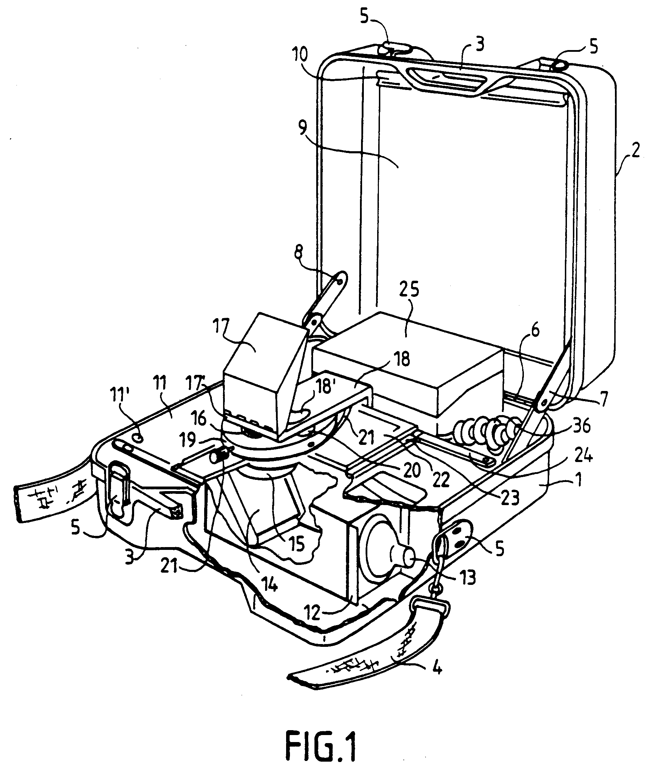

Comme représenté sur la figure 1, le lecteur de microfiches portatif se présente extérieurement sous la forme d'une mallette parallèlépipèdique comportant un fond de mallette 1 et un couvercle 2. Cette mallette est réalisée en matière plastique injectée telle que du polypropylène ou similaire, ce qui permet de limiter son poids. Cette mallette présente, de préférence, les dimensions externes suivantes, à savoir une longueur de 40 cm, une largeur de 30 cm et une hauteur d'environ 12 cm. Elle est donc d'un encombrement réduit.

Comme représenté sur la figure 1, le couvercle et le fond de mallette 2 sont munis chacun d'une demi-poignée 3 réalisée lors de l'injection et qui forme poignée lors de la fermeture. D'autre part, pour faciliter son transport, la mallette est munie d'une sangle 4 fixée de manière amovible sur des attaches 5 visées sur le fond de mallette. La fermeture de la mallette est réalisée, de préférence, à l'aide de deux attaches rapides 5, 5′ du type grenouille et sauterelle. Comme représenté sur la figure 1, le couvercle 2 est fixé sur le fond de mallette 1 par des charnières 6. D'autre part, deux compas articulés 7, dans le mode de réalisation représenté, sont fixés entre le fond de mallette 1 et le couvercle 2. Ces compas 7 maintiennent le couvercle 2 ouvert à 90°. De plus, pour permettre une ouverture du couvercle à 180° par rapport au fond de mallette, les compas 7 sont solidaires du fond de mallette mais sont fixés sur le couvercle par l'intermédiaire d'un moyen de clipsage 8 permettant de désolidariser les compas du couvercle. Ainsi, lorsque les compas sont désolidarisés du couvercle et que le couvercle fait un angle de 180° par rapport à la partie inférieure de la mallette, il est alors possible de réaliser une projection hors champs de projection, notamment sur un mur ou sur un autre écran.

D'autre part, comme représenté sur la figure 1, le fond de couvercle 2 est muni d'un écran de projection 9. Cet écran de projection est un écran plan à réflexion en isotrope réalisé par exemple en aluminium. Il tapisse tout le fond du couvercle, ce qui permet d'améliorer sa rigidité. D'autre part, conformément à la présente invention dans la partie supérieure de l'écran 9, on a prévu un moyen de fixation d'une feuille amovible tel qu'un moyen de pincement 10 constitué par exemple par un ensemble de deux lames plaquées l'une contre l'autre par un ressort. Cette pince 10 permet de maintenir une feuille, notamment une feuille de papier de format A4, Ainsi, en projection, lorsque le couvercle est à 90°, la feuille recouvrant l'écran permet aux techniciens de repérer des détails sur le schéma projeté sans altérer la surface de l'écran.

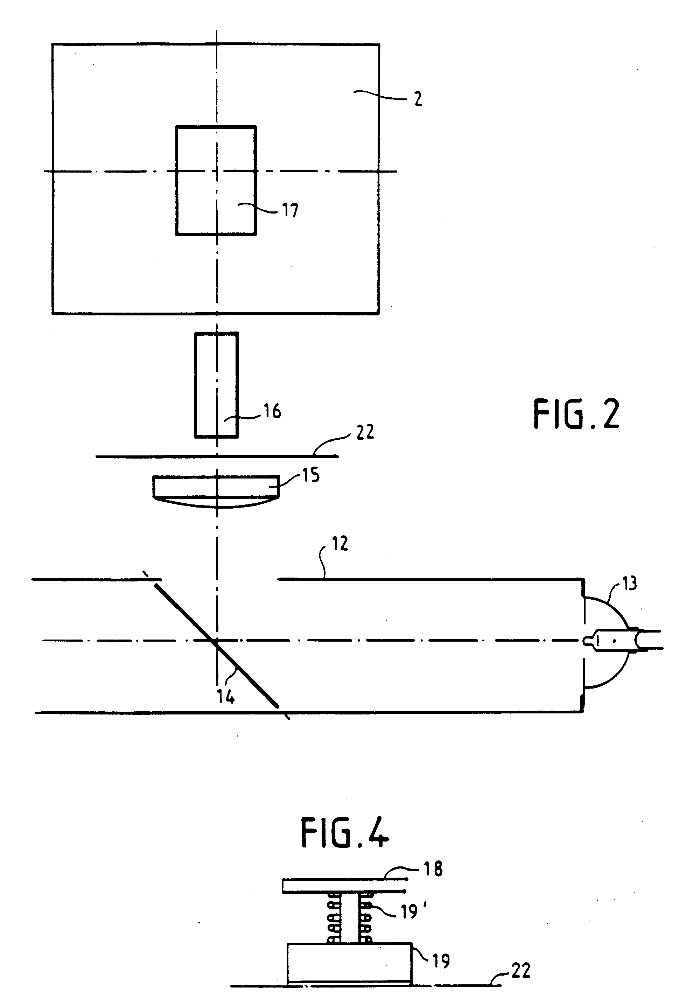

On décrira maintenant de manière plus détaillée, l'unité optique et le passe-vue qui sont montés dans le fond de la mallette 1. Comme représenté sur la figure 1, le fond de mallette 1 reçoit une platine support 11 destinée à supporter l'ensemble des éléments formant l'unité optique ainsi que le passe-vue. Cette platine support 11 est montée de manière amovible sur des plots non représentés réalisés dans le fond de la mallette. La platine support 11 est fixée sur ces plots par l'intermédiaire de vis symbolisées par la référence 11′. Sous la platine 11 est fixé un bâti 12 réalisé notamment en aluminium. Sur ce bâti 12 sont fixées respectivement la lampe de projection 13 et un premier miroir de renvoi 14. La lampe peut être constituée par une lampe dichroïque halogène alimentée par une tension continue d'environ 14 Volts. Le miroir de renvoi 14 renvoie verticalement vers le haut la lumière issue de la lampe 13 comme représenté sur la figure 2. Il fait donc un angle de 45° par rapport à l'horizontal. Dans la platine support est prévue une ouverture circulaire dans laquelle vient se monter un condenseur asphérique 15. De plus, au dessus de la platine est amené à se déplacer un passe-vues 22 qui sera décrit de manière plus détaillée ci-après. Au-dessus du passe-vues, l'unité optique comporte un objectif 16 et un deuxième miroir de renvoi 17 qui renvoie à 90° la lumière vers l'écran 9. Comme représenté sur la figure 1, le second miroir de renvoi 17 est fixé de manière rabattable sur un élément-support 18 sensiblement en forme de L ou en forme de V. Le miroir 17 est monté à une extrémité de l'élément support 18 par l'intermédiaire de charnières 17′ permettant de rabattre le miroir 17 sur l'élément support 18 pendant le transport. D'autre part, l'autre bras de l'élément support 18 est fixé sur la platine support 11.

Conformément à la présente invention, l'objectif 16 est monté dans un porte-objectif 19. Ce porte-objectif 19 comporte, de préférence, plusieurs barillets 20 recevant chacun un objectif différent. Dans le mode de réalisation représenté, le porte-objectif 19 comporte au moins trois barillets 20 positionnés, par exemple, chacun à 90°. La sélection de l'objectif est donc réalisée par rotation à 90° du porte-objectif 19. Le maintien en position du porte-objectif, une fois l'objectif sélectionné, est réalisé par l'intermédiaire d'une lame élastique 23 fixée sur l'élément support 18 qui vient se bloquer dans un méplat réalisé dans le porte-objectif. D'autre part, la mise au point s'effectue par une vis de réglage référencée 21 agissant sur l'objectif utilisé. Conformément à la présente invention, le porte-objectif 19 de forme circulaire dans le mode de réalisation représenté est fixé de manière flottante, par l'intermédiaire d'un axe central sur l'élément support 18. Pour permettre le passage des objectifs et la visualisation d'une image, l'élément 18 présente donc une découpe 18′. De plus, le porte-objectif 19 est maintenu en contact constant avec le passe-vues par un moyen élastique tel qu'un ressort de pression 19′ comme représenté schématiquement sur la figure 4.

Le lecteur de microfiches portatif comporte donc un passe-vues permettant de recevoir des microfiches standards, à savoir des microfiches normatives de type NFZ 43033. Le passe-vues 22 est constitué, de manière connue, par deux plaques de verre dont l'une est montée dans un bâti et dont l'autre est fixée sur un bord de la première de manière à s'ouvrir automatiquement. Ce passe-vues est monté sur une platine 23 munie de chaque côté d'une glissière et d'une ouverture non représentée au niveau du condenseur. Les glissières de la platine 23 permettent de déplacer le passe-vues 22 selon l'une des directions horizontales. D'autre part, la platine 23 est montée sur une glissière à bille 24 qui assure le déplacement de l'ensemble platine et passe-vues dans l'autre direction horizontale. Le passe-vues peut donc être déplacé suivant les axes X et Y. De plus, le passe-vues est muni d'un moyen de blocage en position lors du transport.

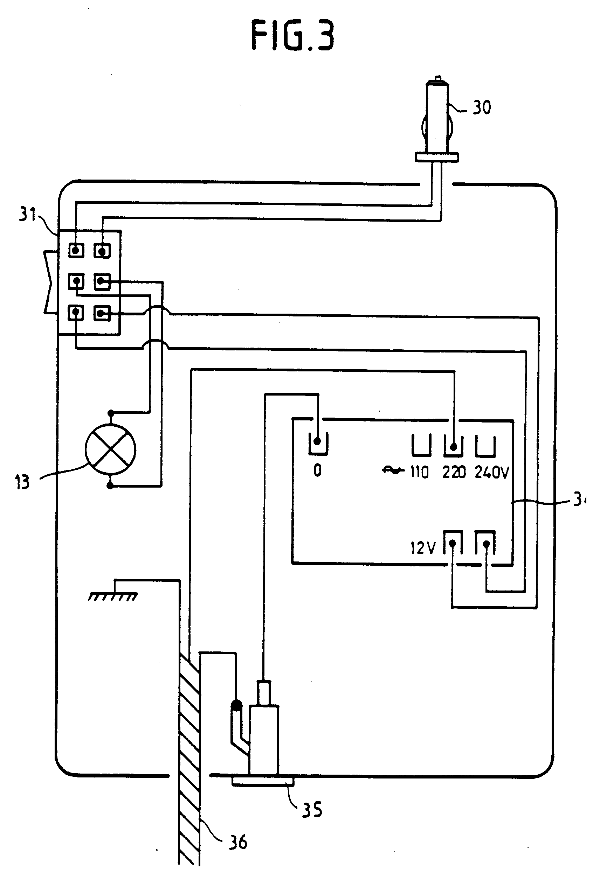

On décrira maintenant en se référant plus particulièrement à la figure 3 le système d'alimentation de la lampe 13. Le lecteur de microfiches portatif, conforme à la présente invention, peut être alimenté soit directement sur le secteur, soit sur une batterie de 12 Volts, notamment par l'intermédiaire de la prise allume-cigares référencée 30 sur la figure 3. La commutation entre l'alimentation 12 Volts et l'alimentation-secteur est réalisée par l'intermédiaire de l'interrupteur 31. Comme la lampe 13 est une lampe 14 Volts, le secteur est envoyé sur un transformateur 34 effectuant la transformation 220, 110 ou 240 Volts alternatifs en 12 Volts continus. Pour des raisons de sécurité, un fusible 35 est prévu entre la borne 0 et l'alimentation-secteur. Pour faciliter le rangement des cordons d'alimentation secteur ou prise allume-cigares, de préférence ces cordons 36 sont constitués par des cordons spiralés et extensibles.

D'autre part, comme représenté sur la figure 1, la mallette comporte un emplacement pour recevoir un boîtier 25 permettant le rangement des microfiches. Ce boîtier 25 est de préférence amovible. Dans le mode de réalisation représenté, on a pu insérer dans la mallette un boîtier contenant 300 microfiches, ce qui correspond à environ 75 000 pages d'informations.

Il est évident pour l'homme de l'art que certains détails techniques peuvent être modifiés sans sortir du cadre de l'invention.

## Revendications

1. Lecteur de microfiches portatif sous forme d'une mallette parallèlépipèdique comportant dans le couvercle (2) de la mallette un écran de projection (9) et dans le fond de la mallette (1) un passe-vues et une unité optique projetant, en position ouverte du couvercle, une image du passe-vues sur la face avant de l'écran caractérisé en ce que le couvercle est muni d'un moyen de fixation (10) pour tenir de manière amovible une feuille devant l'écran.

2. Lecteur de microfiches portatif selon la revendication 1, caractérisé en ce que le couvercle (2) est solidarisé avec le fond de la mallette par l'intermédiaire de moyens (7, 8) permettant son ouverture à 90° ou à 180° par rapport au fond de la mallette.

3. Lecteur de microfiches portatif selon la revendication 2, caractérisé en ce que les moyens permettant l'ouverture du couvercle à 90° ou à 180° par rapport au fond de la mallette sont constitués par au moins un compas (7) dont une extrémité (8) est fixée de manière amovible sur la mallette.

4. Lecteur de microfiches portatif selon l'une quelconque des revendications 1 à 3, caractérisé en ce que le passe-vues (22) est monté sur une platine (23) déplaçable selon les deux directions horizontales.

5. Lecteur de microfiches portatif selon l'une quelconque des revendications 1 à 4, caractérisé en ce que l'unité optique est constituée par un miroir de renvoi (14) de la lumière, un condenseur asphérique (15), un objectif (16) et un miroir de renvoi (17) pour projection, chaque élément étant monté sur une platine-support (11) fixée de manière amovible sur le fond de la mallette.

6. Lecteur de microfiches portatif selon la revendication 5, caractérisé en ce que le miroir de renvoi (17) pour projection est monté de manière rabattable à l'extrémité d'un élément-support (18) sensiblement en forme de L dont l'autre extrémité est fixée sur la platine-support (11).

7. Lecteur de microfiches portatif selon la revendication 6, caractérisé en ce que l'objectif (16) est monté dans un porte-objectif (19) fixé de manière flottante sur l'élément-support (18).

8. Lecteur de microfiches portatif selon la revendication 7, caractérisé en ce que le porte-objectif est maintenu en appui contre le passe-vue par l'intermédiaire d'un moyen élastique monté entre le porte-objectif et l'élément support.

9. Lecteur de microfiches portatif selon la revendication 7, caractérisé en ce que le porte-objectif (19) comporte au moins un barillet (20) pour recevoir l'objectif et un moyen (21) de positionnement et de maintien en place du barillet en face du condenseur.

10. Lecteur de microfiches portatif selon l'une quelconque des revendications 6 à 9, caractérisé en ce que l'élément-support (18) est muni d'une découpe (18′) pour le passage du ou des objectifs.

11. Lecteur de microfiches portatif selon l'une quelconque des revendications 1 à 10, caractérisé en ce que le fond de la mallette comporte un emplacement pour un boîtier (25) de rangement des microfiches amovible.

## Patentansprüche

1. Tragbares Mikrofiche-Lesegerät in Form eines quaderförmigen Koffers, das im Deckel (2) des Koffers einen Projektionsschirm (9) und im Boden des Koffers (1) eine Mikrofichebühne und eine optische Einheit enthält, die bei offenem Deckel ein Bild der Mikrofichebühne auf die Vorderseite des Schirms projiziert, dadurch gekennzeichnet, daß der Deckel mit einem Befestigungsmittel (10) ausgestattet ist, um ein Blatt abnehmbar vor dem Schirm zu halten.

2. Tragbares Mikrofiche-Lesegerät nach Anspruch 1, dadurch gekennzeichnet, daß der Deckel (2) an dem Boden des Koffers durch Mittel (7, 8) befestigt ist, die sein Öffnen um 90° oder um 180° in bezug auf den Boden des Koffers ermöglichen.

3. Tragbares Mikrofiche-Lesegerät nach Anspruch 2, dadurch gekennzeichnet, daß die Mittel, die das Öffnen des Deckels um 90° oder um 180° in bezug auf den Boden des Koffers ermöglichen, durch wenigstens eine Schere (7) gebildet sind, von der ein Ende (8) lösbar am Koffer befestigt ist.

4. Tragbares Mikrofiche-Lesegerät nach einem der Ansprüche 1 bis 3, dadurch gekennzeichnet, daß die Mikrofichebühne (22) auf einer Platine (23) montiert ist, die in den beiden horizontalen Richtungen verstellbar ist.

5. Tragbares Mikrofiche-Lesegerät nach einem der Ansprüche 1 bis 4, dadurch gekennzeichnet, daß die optische Einheit durch einen Lichtumlenkspiegel (14), einen asphärischen Kondensor (15), ein Objektiv (16) und einen Projektionsumlenkspiegel (17) gebildet ist, wobei jedes Element auf einer Trägerplatine (11) montiert ist, die abnehmbar am Boden des Koffers befestigt ist.

6. Tragbares Mikrofiche-Lesegerät nach Anspruch 5, dadurch gekennzeichnet, daß der Projektionsumlenkspiegel (17) abklappbar am Ende eines im wesentlichen L-förmigen Trägerelements (18) montiert ist, dessen anderes Ende an der Trägerplatine (11) befestigt ist.

7. Tragbares Mikrofiche-Lesegerät nach Anspruch 6, dadurch gekennzeichnet, daß das Objektiv (16) in einem Objektivträger (19) montiert ist, der schwebend an dem Trägerelement (18) befestigt ist.

8. Tragbares Mikrofiche-Lesegerät nach Anspruch 7, dadurch gekennzeichnet, daß der Objektivträger über ein elastisches Mittel, das zwischen dem Objektivträger und dem Trägerelement angebracht ist, in Anlage an der Mikrofichebühne gehalten wird.

9. Tragbares Mikrofiche-Lesegerät nach Anspruch 7, dadurch gekennzeichnet, daß der Objektivträger (19) wenigstens ein Gehäuse (20) zur Aufnahme des Objektivs und ein Mittel (21) aufweist, das das Gehäuse vor dem Kondensor positioniert und in seiner Lage hält.

10. Tragbares Mikrofiche-Lesegerät nach einem der Ansprüche 6 bis 9, dadurch gekennzeichnet, daß das Trägerelement (18) mit einem Ausschnitt (18′) für den Durchgang des oder der Objektive ausgestattet ist.

11. Tragbares Mikrofiche-Lesegerät nach einem der Ansprüche 1 bis 10, dadurch gekennzeichnet, daß der Boden des Koffers einen Platz für einen abnehmbaren Behälter (25) zur Einordnung der Mikrofiches enthält.

## Claims

1. A portable microfiche reader in the form of a valise with parallel faces comprising, in the cover (2) of the valise, a projection screen (9) and in the bottom of the valise (1) a microfiche support and an optical unit projecting, in the opened state of the cover, an image from the microfiche support toward the front face of the screen, characterized in that the cover is provided with a securing means (10) to hold a sheet in a removable manner in front of the screen.

2. The portable microfiche reader as claimed in claim 1, characterized in that the cover (2) is secured to the bottom of the valise by the intermediary of means (7, 8) permitting the opening thereof by 90° or 180° in relation to the bottom of the valise.

3. The portable microfiche reader as claimed in claim 2, characterized in that the means permitting the opening of the cover by 90° or 180° are constituted by at least one folding link (7) of which one end (8) is secured in detachable manner to the bottom of the valise.

4. The portable microfiche reader as claimed in any one of the claims 1 through 3, characterized in that the microfiche support (22) is mounted on a plate (23) able to be moved in either of the two horizontal directions.

5. The portable microfiche reader as claimed in any one of the claims 1 through 4, characterized in that the optical unit is constituted by a light return mirror (14), an aspheric condenser (15), an objective (16) and a return mirror (17) for projection, each element being mounted on a support plate (11), which is fixed in a detachable fashion on the bottom of the valise.

6. The portable microfiche reader as claimed in claim 5, characterized in that the return mirror (17) for projection is mounted in a fold-down fashion at the end of a substantially L-shaped support element (18) whose other end is fixed on the support plate (11).

7. The portable microfiche reader as claimed in claim 6, characterized in that the objective (16) is mounted in an objective carrier (19) fixed in a floating fashion on the support element (18).

8. The portable microfiche reader as claimed in claim 7, characterized in that the objective carrier is held in a supporting manner against the microfiche support by the intermediary of an elastic means mounted between the objective carrier and the support element.

9. The portable microfiche reader as claimed in claim 7, characterized in that objective support (19) comprises at least one barrel tube (20) in order to receive the objective and a means (21) for positioning and maintaining the barrel tube in position facing the condenser.

10. The portable microfiche reader as claimed in any one of the claims 6 through 9, characterized in that the support element (18) is provided with a cutout (18′) for the passage of the objective or objectives.

11. The portable microfiche reader as claimed in any one of the claims 1 through 10, characterized in that the bottom of the valise comprises a mount for a detachable case (25) for the arrangement of the microfiches.
